# EUROPEAN PATENT SPECIFICATION

(11) **EP 2 997 766 B1**
(45) Date of publication and mention of the grant of the patent: **08.04.2020**
(21) Application number: 13723110.6
(22) Date of filing: 14.05.2013
(51) Int. Cl.: H04W 36/14, H04W 76/22, H04W 84/02

(54) **COMMUNICATING WITH A RADIO NETWORK CONTROL NODE IN A COMMUNICATION NETWORK**
KOMMUNIKATION MIT EINEM FUNKNETZSTEUERUNGSKNOTEN IN EINEM KOMMUNIKATIONSNETZWERK
COMMUNICATION AVEC UN NOEUD DE COMMANDE DE RESEAU RADIO DANS UN RESEAU DE COMMUNICATION

(43) Date of publication of application: 23.03.2016
(73) Proprietor: Telefonaktiebolaget LM Ericsson (publ), 164 83 Stockholm (SE)
(72) Inventor: NYLANDER, Tomas, SE-139 34 Värmdö (SE); VIKBERG, Jari Tapio, SE-153 38 Järna (SE)
(74) Representative: Ericsson
(86) International application number: PCT/EP2013/059953
(87) International publication number: WO 2014/183788

(56) References cited:
- WO-A1-2009/121745
- WO-A1-2013/042330
- "Interworking Wi-Fi and Mobile Networks", , 20 February 2013 (2013-02-20), XP055097150, Retrieved from the Internet: URL:http://c541678.r78.cf2.rackcdn.com/wp/ wp-interworking-wi-fi-and-mobile-networks. pdf [retrieved on 2014-01-20]
- "Cellular-Wi-Fi Integration Cellular-Wi-Fi White Paper", , 30 June 2012 (2012-06-30), XP055097153, Retrieved from the Internet: URL:http://www.interdigital.com/wp-content /uploads/2012/08/Cellular_WiFi_Integration -White-Paper.pdf [retrieved on 2014-01-20]

## Description

### TECHNICAL FIELD

The present invention relates to the field of communicating with a radio network control node in a communication network.

### BACKGROUND

Different Radio Access Technologies (RATs) are available for mobile communications, allowing a user of a user device such as a mobile terminal (termed herein User Equipment (UE)) to access communication services like voice calls, Internet browsing, video calls, file transmissions, audio/video streaming, electronic messaging and e-commerce. RATs can be divided into different categories.

A first category includes RATs suitable for use in mobile or cellular telecommunications systems like GSM (Global System for Mobile Communications), UMTS (Universal Mobile Telecommunications System), FOMA (Freedom of Mobile Multimedia Access), EPS (Evolved Packet System), D-AMPS (Digital-Advanced Mobile Phone Service), CDMA2000 (Code Division Multiple Access 2000) or WiMAX (Worldwide Interoperability for Microwave Access). Common examples of RATs in this first category are 3GPP (3rd Generation Partnership Project) GPRS/EDGE (General Packet Radio Service/Enhanced Data rates for Global Evolution), 3GPP WCDMA/HSPA (Wideband Code Division Multiple Access/High-Speed Packet Access), 3GPP LTE/E-UTRAN (Long-Term Evolution/Evolved Universal Terrestrial Radio Access Network), and TD-SCDMA (Time Division Synchronous Code Division Multiple Access).

A second category includes RATs which are suitable for use in short-range wireless communication networks, such as Wi-Fi or WLAN (Wireless Local Area Network). One example of a RAT in this second category is the IEEE 802.11 family of wireless standards. Other examples include Bluetooth and NFC (Near-Field Communication).

Many UEs are enabled for use with more than one RAT, such as one or more RATs selected from the first category, as well as one or more RATs selected from the second category. A UE, enabled both for cellular access (e.g. 3GPP LTE/E-UTRAN and/or WCDMA/HSPA for use in EPS and/or UMTS) and for Wi-Fi access, is used herein as an example of a multi-RAT-enabled user device.

It is desirable for 3GPP operators to move data traffic from their cellular networks to an alternative access network such as Wi-Fi, in order to reduce the load on the cellular network, and because Wi-Fi access typically uses unlicensed spectrum. However, owing to the inherent differences in architecture and operation between mobile telecommunications networks on the one hand and Wi-Fi networks on the other hand, in many existing setups there has not been any integration between the two. Allowing two such networks to co-exist in parallel but "hidden" from each other is fully acceptable, but not optimal from resource utilization, load distribution and user experience perspectives. Therefore, certain integration attempts have been made, in particular to use Wi-Fi to offload traffic from mobile networks. The existing mobility towards Wi-Fi is controlled by vendor-specific implementations. A common basic principle is for the UE to attempt to access and associate to a known Wi-Fi Access Point (AP) whenever it is detected. However, this does not take into account the load on the cellular network or the Wi-Fi network, which may result in a worse performance for the user.

One possible way to deal with this scenario is to control the access to the non-3GPP access network (e.g. Wi-Fi) as a function of the UE's performance, as well as the overall network, UE and traffic characteristics. These characteristics may be available in the source 3GPP RAN serving the UE as well as in the non-3GPP access network. A decision can be taken as to whether to allow the UE to attach to the Wi-Fi access network. The UE's 3GPP RAN cannot be identified by the Wi-Fi access network when the UE accesses the Wi-Fi access network.

Wi-Fi integration towards the mobile core network can improve the end user experience further. This requires common authentication between 3GPP and Wi-Fi networks and integration of Wi-Fi user plane traffic to the mobile core network. The common authentication is based on automatic SIM-based authentication for both access types. Wi-Fi user plane integration also provides the mobile operator the opportunity to provide the same services, such as parental control and subscription based payment methods, for the end users when connected both via 3GPP and via Wi-Fi. Overlay solutions (S2b, S2c) are specified since 3GPP Rel-8 while integration solutions (S2a) are under development (S2a, S2b, S2c indicating the 3GPP interface/reference point name towards the Packet Date Network Gateway, PDN-GW). These solutions are specified in 3GPP TS 23.402.

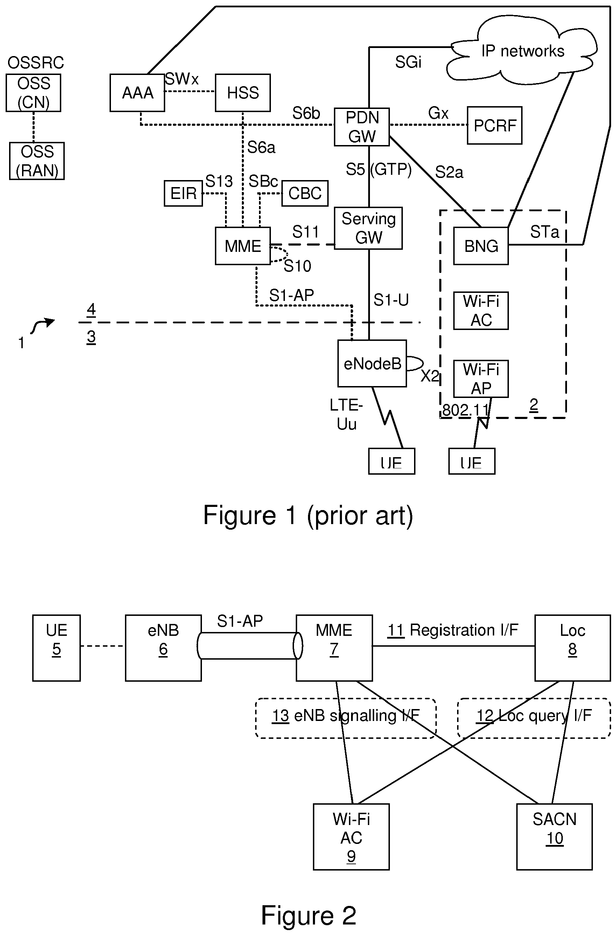

Figure 1 illustrates a network architecture for integration of a mobile telecommunications system 1 in the form of an Evolved Packet System (EPS) and a Wi-Fi access network 2. EPS was introduced in 3GPP Release 8 and Release 9. For detailed information about EPS, reference is made to 3GPP TS 23.401. The mobile EPS system 1 comprises an E-UTRAN 3 and an EPC 4. The E-UTRAN 3 has a combined base station and radio network controller known as eNodeB. The EPC 4 has units known as MME (Mobility Management Entity), a Serving Gateway (SGW) and a Packet Data Network Gateway (PDN-GW). The eNodeB is connected via the S1 interfaces, S1-MME and S1-U to the MME and SGW respectively. Figure 1 also shows how the Wi-Fi access network 2 is connected to the PDN-GW via the S2a interface and to the 3GPP AAA Server via the STa interface. The shown Wi-Fi access network is an exemplary deployment and contains a Wi-Fi Access Point (AP), a Wi-Fi Access Controller (AC) and a Broadband Network Gateway (BNG). In another example, the Wi-Fi AP may be co-located with a Residential Gateway (RG). In a further example, the Wi-Fi network may also comprise a Trusted WLAN Access Gateway (TWAG). In addition, the interface between the Wi-Fi AC and the PDN GW, i.e. the S2a interface, may also be implemented between the PDN GW and for example either the BNG or the RG.

Wi-Fi integration into Radio Access Network (RAN) may be either by combining both 3GPP and Wi-Fi in small pico base stations to gain access to the Wi-Fi sites with 3GPP technology and vice versa, or by integrating the Wi-Fi access tighter into the RAN by introducing enhanced network controlled traffic steering between 3GPP and Wi-Fi based on knowledge about the total situation on the different accesses. For this second level of integration, issues with UE controlled Wi-Fi selection must be avoided, such as selecting Wi-Fi when the Wi-Fi connection is bad or when the UE is moving, thus giving better end user performance and better utilization of the combined Wi-Fi and cellular radio network resources.

The current methods for integration of Wi-Fi into 3GPP network do not offer good support for network controlled Wi-Fi/3GPP access selection and service mapping when taking into consideration parameters such as UE mobility, 3GPP/Wi-Fi cell and network load, radio link performance, UE state (e.g. idle, connected) etc. In order to achieve this functionality, the UE context in the 3GPP RAN (which holds information about radio performance, UE mobility etc. on the 3GPP side) must be somehow associated with the UE context in the Wi-Fi network. This can then enable a network entity to take decisions whether the UE should access the Wi-Fi network or not depending on if the UE is stationary, and/or has a good connection to the Wi-Fi AP etc. The decision can then be signalled to the UE or executed internally in the 3GPP / Wi-Fi network (e.g. to control UE admission to Wi-Fi).

Furthermore, the types of parameters mentioned above (mobility, cell load, network load etc.) can be used by other nodes in addition to those that determine Wi-Fi access. For example, a 'service aware' node in the core network may use this information to adjust a level of service provided to the UE. Consider the case where a UE received streaming video. If a node in the core network, or above the core network, can determine local conditions in the radio access network, it can adjust a quality and/or resolution of the video to ensure that the user experience is not impacted by poor network conditions.

WO2009/121745 discloses a method and apparatus for enabling and improving inter-domain handover.

### SUMMARY

One solution to associate a 3GPP context with a Wi-Fi context for a UE is to use the International Mobile Subscriber Identity (IMSI) associated with the UE. The current serving 3GPP RAN node updates a UE database with the association IMSI and serving 3GPP RAN node. When a legacy UE attempts to access a Wi-Fi network, the Wi-Fi network contacts the UE database to retrieve information about current 3GPP RAN node serving the UE, and the IMSI is used as the main key in this query. Once the Wi-Fi side retrieves information about the 3GPP RAN node, communication between the 3GPP and Wi-Fi RANs is enabled. Information on both access networks can be combined to make an optimal mobility decision (either at the non-3GPP access side, at the 3GPP RAN node serving the UE, or at a more central function that also collects the information needed for the mobility decision). However, the IMSI is not known to eNodeBs (eNB) in the E-UTRAN, and so existing RAN-level only solutions are not feasible for LTE or for the case when the UE is either in idle or active state in LTE/E-UTRAN.

It is an object to provide a mechanism by which a node such as a Wi-Fi AC or a Service Aware control node that has no knowledge of the identity of the controlling RAN node can communicate with the controlling RAN node. This is achieved by providing an interface in the controlling core network node, which the Service Aware control node and/or the entity in the Wi-Fi system can use to communicate with the controlling RAN node. This has the advantage of re-using an existing established connection between the RAN control node and the core network control node, including re-using existing security mechanisms and associations.

Aspects of the present invention are as defined in the independent claims, reference to which should now be made. Optional features are defined in the dependent claims. Features in embodiments include the following.

In one embodiment, there is provided a method of communicating with a radio network control node in a communication network. A core network control node receives a first message from a further node. The first message identifies a User Equipment (UE) connected with the radio network control node. The core network control node determines whether an established connection relating to the UE exists between the core network control node and the radio network control node. If not then the first message is forwarded to the radio network control node using the established connection, a first response message is received from the radio network control node and forwarded to the further node. This has the advantage of allowing the further node to communicate with the radio network control node using an established connection. If the established connection does not exist, a second response message is sent to the further node informing the further node that the UE is not connected with the radio network control node. The method described above allows load signalling to the further node without requiring any new interfaces at the radio network control node, and without requiring any new security associations to be needed.

As an option, the further node is a node in a Wi-Fi access network. It may for example, require information about RAN conditions in order to determine whether to allow access of the UE to the Wi-Fi access network. In this case, the first response includes a decision relating to allowing access of the UE to a Wi-Fi access network.

As an alternative option, the further node is a Service Aware control node. In this case the first response may include information relating to service optimization.

The method finds use in different types of network. For example, the core network control node is optionally selected from any of a Mobility Management Entity and a Serving GPRS Support node.

The established connection is optionally a S1-AP connection that is associated with the UE.

The method optionally further comprises forwarding the response to a further node via a location function, the location function storing information associating an identity of the core network control node with the UE.

In another embodiment, there is provided a method of communicating with a radio network control node in a communication network. A further node in the communication network sends a message to a core network control node associated with a UE. The message identifies the UE and is to be forwarded to an associated radio network control node. The node receives a second message from the core network control node. The second message includes either requested information obtained by the core network control node from the radio network control node, or an indication that the UE is not connected to the radio network control node. Again, this has the advantage of allowing the node to communicate with the node in the RAN via the core network control node without requiring new interfaces or security associations to be set up at the radio network control node.

As an option, the node is a node in a Wi-Fi access network, and the requested information includes a decision relating to allowing access of the UE to a Wi-Fi access network.

As an alternative option, the node is a Service Aware control node, and the requested information includes information relating to service optimization.

The core network control node is optionally selected from any of a Mobility Management Entity and a Serving GPRS Support node. The radio network control node is optionally selected from any of an eNodeB and a Radio Network Controller.

In a further embodiment, there is provided a core network control node. The core network control node is provided with a first receiver for receiving a first message from a further node. The first message identifies a UE connected with a radio network control node. A processor determines whether an established connection relating to the UE exists between the core network control node and the radio network control node. A first transmitter is provided for, in the event that the established connection exists, forwarding the first message to the radio network control node using the established connection. A second receiver is provided for receiving a first response message from the radio network control node. A second transmitter is provided for forwarding the first response to the further node. A third transmitter is provided for, in the event that the established connection does not exist, sending a second response message to the further node, the second response message informing the further node that the UE is not connected with the radio network control node. Note that the third and second transmitters are optionally embodied in the same physical transmitter.

As an option, the further node is a node in a Wi-Fi access network, and the first response includes a decision relating to allowing access of the UE to a Wi-Fi access network. As an alternative option, the further node is a Service Aware control node, and wherein the first response includes information relating to service optimization.

The core network control node is optionally either a Mobility Management Entity or a Serving GPRS Support node.

As an option, the second transmitter is arranged forward the response to the further node via a location function, the location function storing information associating an identity of the core network control node with the UE.

According to a fourth aspect, there is provided a node for use in a communication network. The node is provided with a transmitter for sending a message to a core network control node. The message identifies a UE associated with a radio network control node. A receiver is also provided for receiving from the core network control node a second message, the second message including any of requested information obtained by the core network control node from the radio network control node, and an indication that the UE is not connected to the radio network control node.

The node is optionally a node in a Wi-Fi access network, and the requested information includes a decision relating to allowing access of the UE to a Wi-Fi access network. As an alternative option, the node is a Service Aware control node, and the requested information includes information relating to service optimization.

The core network control node is optionally a Mobility Management Entity or a Serving GPRS Support node and the radio network control node is optionally an eNodeB or a Radio Network Controller.

According to a fifth aspect, there is provided a computer program comprising computer readable code which, when run on a core network control node, causes the core network control node to perform the method as described above in the first embodiment.

According to a sixth aspect, there is provided a computer program comprising computer readable code which, when run on a node causes the node to perform the method as described above in the first embodiment.

According to a seventh aspect, there is provided a computer program product comprising a non-transitory computer readable medium and a computer program as described in either of the fifth or sixth embodiments, wherein the computer program is stored on the non-transitory computer readable medium.

### BRIEF DESCRIPTION OF THE DRAWINGS

Figure 1 illustrates schematically in a block diagram a network architecture integrating a mobile telecommunications system with a Wi-Fi access network;
Figure 2 illustrates schematically in a block diagram an exemplary communications network architecture;
Figure 3 is a flow diagram showing exemplary steps;
Figure 4 is a signalling diagram showing exemplary steps;
Figure 5 illustrates schematically in a block diagram an exemplary core network control node;
Figure 6 illustrates schematically in a block diagram an exemplary node such as a Wi-Fi Access Controller or a Service Aware control node.

### DETAILED DESCRIPTION

Figure 2 shows a simplified network architecture. A UE 5 attaches to the EPC via an eNB 6. The eNB 6 communicates with a MME 7 via an existing connection relating to the UE 5. An S1-AP connection is a UE-associated logical S1-connection, as described in 3GPP TS 36.413. A location function 8 is introduced, which can be queried directly or indirectly by a node that wishes to obtain information about the UE. The two exemplary nodes shown are a Wi-Fi AC 9 and a Service Aware control node 10. The Service Aware control node 10 requires information about the UE 5 and radio conditions to adapt a service provided to the UE 5. Note that the Wi-Fi AC 9 is shown for illustrative purposes, and other nodes (such as an Access Point, AP, BNG or TWAG) in the Wi-Fi access network could perform similar functions. Also note that the Wi-Fi AC 9 and the Service Aware control node 10 are provided as examples of functional entities that require communication with an eNB 6, but other nodes may also require communication with the eNB 6. Furthermore, the location function 8 is illustrated as a separate entity. Figure 2 is a functional illustration, and it will be appreciated that the location function 8 may be co-located with any other suitable functional entity, such as the MME 7. The location function can also be an existing function or node or entity such as a Home Subscriber Server (HSS).

In a first example, consider the case where the UE 5 attempts to access a Wi-Fi access network. The Wi-Fi AC 9 obtains the UE's IMSI based on different existing methods. When the Wi-Fi AC 9 retrieves the UE's IMSI, it queries the location function 8 using this IMSI. In this case the UE entry for the IMSI in the location function 8 points to the MME 7. The location function 8 may contact the MME 7 directly, or the location function 8 may provide the information needed for the Wi-Fi AC 9 to contact the correct MME 7 and to identify the correct UE context in the MME 8. Note that identifiers other than the IMSI may be used and stored in the location function 8. In either case, information related to the UE 5 on the Wi-Fi side is sent to the MME 7. This may include a query of whether the 3GPP RAN side should accept the UE's 5 access attempt to Wi-Fi or not.

When the MME 7 receives the query, it identifies the correct UE context. If the UE is in Radio Resource Control (RRC) Connected mode, the MME forwards the query to the eNB over the existing S1-AP connection. The eNB makes the decision on access and then returns the answer to the MME 7. The MME 7 then return the answer to the Wi-Fi AC 9 (either directly or via the Location function). Finally, the Wi-Fi AC 9 acts according to the decision. If the UE is not in RRC connected mode, the MME informs the Wi-Fi AC 9 about this.

A similar operation may be performed by the Service Aware control node 10. Consider the case where a UE 5 receives streaming media. Using existing techniques, the Service Aware control node 10 cannot obtain information about the conditions in the RAN. However, the Service Aware control node 10 obtains the UE's IP address and knows the APN for the traffic it sees, it can then query the location function 8 using the APN and UE IP address. The entry in the location function 8 identifies the MME 7. As described above, the location function 8 may contact the MME 7 directly, or the location function 8 may provide the information identifying the MME 7 to the Service Aware control node 10. When the MME 7 receives the message, it identifies the correct UE context. If the UE is in RRC Connected mode, the MME forwards the message to the eNB over the existing S1-AP connection. If the UE 5 is not in RRC connected mode, the MME 7 informs the Service Aware control node 10 about that. Depending on the nature of the message the eNB 6 might take different actions, e.g. if the message contained a query, the eNB 6 can reply to the query, use the received information in scheduling decisions, etc (the communication between the MME and service optimization entity may be either directly or via the Location function 8).

Figure 2 further shows a registration interface 10 between the MME 7 and the location function 8. The MME 7 provides information to the location function 8 needed to identify both the UE-context and the MME as part of the registration to the location function 8. The registration interface could be for example the S6a interface or another modified or new interface

Wi-Fi AC 9 is provided with a Location Query interface 11 to the location function 8. In addition, an interface 12 is introduced between W-Fi AC 9 and the MME 7. This is shown as eNB signalling interface. The eNB signalling interface 12 is not required in the situation where the location function 8 proxies the signalling towards the MME 7 on behalf of the querying node (Wi-Fi AC 9 or Service Aware control node 10). In this case the registration interface 10 and the Location Query interface 11 are used instead.

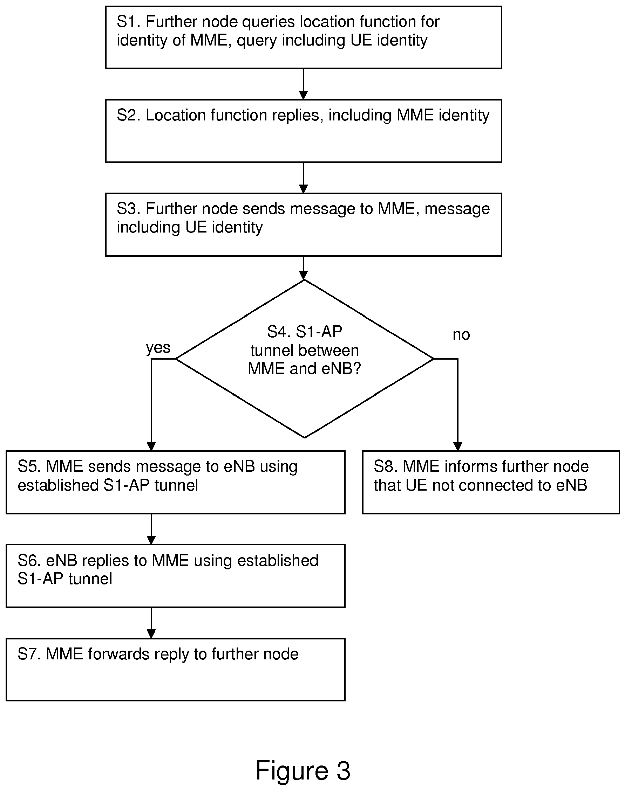

Turning now to Figure 3, there is shown a flow diagram illustrating exemplary steps. The following numbering corresponds to that of Figure 3.

S1. A further node, such as a Wi-Fi AC 9 or a Service Aware control node 10 needs to send a query to the eNB 6, but only has the identity of the UE 5. It does not have the identity of the eNB 6 serving the UE 5. If therefore sends a query to the location function 8 that includes an identity of the UE 5, such as an IMSI or UE IP address and APN.

S2. The location function 8 replies to the further node 9, 10 with information identifying the MME 7 associated with the UE 5.

S3. The further node 9, 10 sends a message to the MME 7 that includes identifiers usable by the further node 9, 10.

S4. The MME 7 determines whether an established S1-AP connection relating to the UE 5 exists between the MME 7 and the eNB 6. If so, then the UE 5 is active and connected with the eNB 6 and the process continues at step S5. If not, then the UE 5 is not connected with the eNB 6 and the process continues at step S8. Note that the UE 5 may be active or inactive in the case where the further node is a Wi-Fi AC 9, but will normally be active in the case where the further node is a Service Aware control node 10.

S5. The MME 7 forwards the message in the established S1-AP connection to the eNB 6.

S6. The eNB 6 either makes a decision (for example, where the further node is a Wi-Fi AC 9 requesting permission for the UE to access the W-Fi access network) or collates information (for example, where the further node is a Service Aware control node 10 requesting information about network conditions). The eNB 6 then replies to the MME 7 using the S1-AP connection.

S7. The MME 7 forwards the reply to the further node 9, 10. The process ends here.

S8. The MME 7 informs the further node (typically the Wi-Fi AC 9) that the UE 5 is not active and connected to the eNB 6.

The above description refers to a Service Aware control node 10. By way of example, a Service Aware control node 10 may control services towards the UE 5 depending on circumstances such as changing network conditions or changing service delivery conditions. For example, if the UE 5 is receiving streaming media, the Service Aware control node 10 may wish to obtain information about the radio network conditions for that specific UE 5. The Service Aware control node 10 may then prioritize traffic to the UE 5 depending on the conditions in the access network, for example according streaming media a higher priority than less time-critical data such as email communications. For streaming video, the Service Aware control node 5 may reorganise video bursts to take account of network conditions.

The MME 7 updates the location function 8 with the UE's 5 IP address and APN. The IP-address can be used by the Service Aware control node 10 to identify the UE 5 when the Service Aware control node 10 communicates indirectly with the eNB 6 via the MME 7. In this case, the UE 5 is normally in RRC connected state.

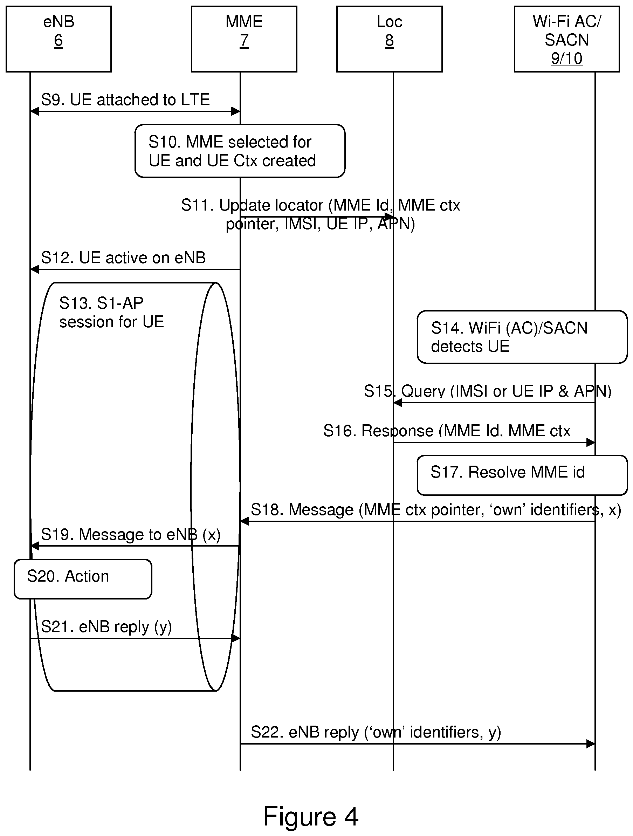

Figure 4 is a signalling diagram showing exemplary signalling. The following numbering corresponds to that of Figure 4.

S9. The UE 5 attaches to the EPC, and the eNB 6 selects the MME 7 and informs the MME 7.

S10. A UE 5 context is created in that MME 7.

S11. The MME 7 registers the UE with the location function 8. The MME 7 provides information needed to identify both the UE-context and the MME as part of the registration to the location function 8. These are shown as MME-ID, MME (UE) Context Pointer and IMSI, but note that other identifiers may be used. In addition, the UE's IP address and the APN may be included.

S12. In this example, the UE 5 remains in RRC Connected state.

S13. A S1-AP connection is created when the UE enters RRC connected state, and a S1-AP connection is created between the eNB 6 and the MME 7 when the UE context is created in the eNB 6.

S14. In the case where the further node is a Wi-Fi AC 9, the UE has attempted to access Wi-Fi. In the case where the further node is a Service Aware control node 10, the Service Aware control node requires information about network conditions for the UE 5.

S15. The further node 9, 10 uses the UE's 5 IMSI as a main key when querying the location function 8 about UE's 5 location in order to find the MME 7 associated with the UE 5. Note that identifiers other than the IMSI may be used such as the UE's IP address and APN.

S16. The location function 8 returns information about the MME 7 where the UE context is located. In this example, the information is shown as MME-ID and MME (UE) Context Pointer. In some cases, the MME (UE) Context Pointer could be the IMSI.

S17. The further node 9, 10 uses the received information to retrieve a transport address to the identified MME 7. This may also identify one of already established MME connections.

S18. The further node 9, 10 side sends a message towards the eNB 6 handling the UE 5 to the identified MME 7. In the case where the further node is a Wi-Fi AC 9, this message may be, for example, a request for a decision on whether the UE 5 can access the Wi-Fi access network. In the case where the further node is a Service Aware control node 10, this message may be a request for network conditions currently experienced by the UE 5.

S19. The MME 7 forwards the message received in S17 using the S1-AP connection for the UE and using either new or modified S1-AP messages. If the UE 5 were in idle state (not as in this example), then the MME 7 replies directly to the message. In this case, the MME 7 could either take the mobility decision or provide information available about the UE to the WLAN access.

S20. In the case where the further node is a Wi-Fi AC 9 requesting access of the UE 5 to the Wi-Fi access network, the eNB 6 decides whether access is permitted or not. In the case where the further node is a Service Aware control node 10 requesting network conditions information, the eNB collates the requested information.

S21 The eNB 6 sends a reply to the MME 7.

S22. The MME 7 forwards the reply to the further node 9, 10, which can act accordingly depending on the reply from the eNB 6.

In the signalling shown in Figure 4, the UE was in RRC connected state. Note that in the case of the further node being a Wi-Fi AC 9 requesting access for the UE 5 to the Wi-Fi access network, the UE 5 need not be in RRC connected state (as shown in step S8 of Figure 3). The mobility decision can be taken either at the non-3GPP access side, at the current 3GPP RAN node serving the UE, or at a more central function that also collects the information needed for the mobility decision. Additionally, in the case of UE 5 being in an idle state in the 3GPP side, the decision can be taken at the MME 7, at the Wi-Fi access side, or at a more central function.

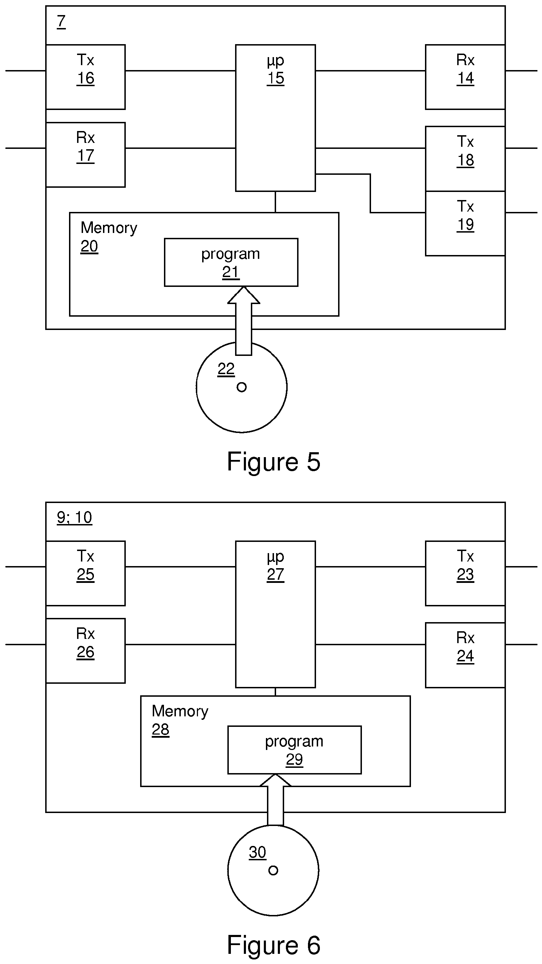

Note also that, as described above and shown in Figure 3 step S8, if the UE 5 is not active on the eNB 6, the MME 7 is aware of this because there is no established S1-AP connection relating to the UE 5 between the MME 7 and the eNB 6 and because the MME knows the state of the UE. In this case, on reception of message S18, the MME 7 can reply immediately to the further node 9, 10 that the UE 5 is not active on an eNB 6.
Turning to Figure 5, there is shown an exemplary core network control node such as an MME 7. In the description below, the node will be referred to as an MME 7, but it will be appreciated that it may be a different entity in a different type of communications network.

The MME 7 is provided with a first receiver 14 for receiving from the Wi-Fi AC 9 or Service Aware control node 10 a first message that identifies the UE connected with the eNB 6. A processor 15 determines whether an established S1-AP connection relating to the UE 5 exists between the MME 7 and the eNB 6. A first transmitter 16 is provided for, in the event that an established connection relating to the UE 5 exists, forwarding the first message to the eNB 6 using the S1-AP connection. A second receiver 17 is provided for receiving a response message from the eNB 6, and a second transmitter 18 is provided for forwarding the first response to the Wi-Fi AC 9 or the Service Aware control node 10. Note that a third transmitter 19 may be provided or, in the event that the S1-AP connection relating to the UE has not been established, sending a second response message to the Wi-Fi AC 9 informing the Wi-Fi AC 9 that the UE 5 is not connected with the eNB 6. Note that the function of the third transmitter 19 may be performed by the second transmitter 18. Note also that the description above of transmitters and receivers is of functional components. These may be embodied in one or more physical transceivers.

The MME 7 may also be provided with a non-transitory computer readable medium in the form of a memory 20 that can be used to store data and a computer program 21. The computer program 21, when executed by the processor 15, causes the MME 7 to behave as described above. Note also that an external carrier medium 22 such as a flash drive or a Compact Disk may be used to store the computer program 21.

Figure 6 shows a further node such as a Wi-Fi AC 9 or a Service Aware control node 10. For the sake of illustration, the following description refers to this node as a Wi-Fi AC 9, but it will be appreciated that the same functions may be provided in any node that requires information from the eNB 6.

The Wi-Fi AC 9 is provided with a first transmitter 23 for sending a first message to a location function 8 a first message. The first message includes an identifier relating to the UE 5. A first receiver 24 is provided for receiving from the location function 8 a second message that includes an identity of the MME 7 associated with the UE 5. A second transmitter 25 is provided for sending a third message to the MME 7, the third message identifying the UE 5 and requesting information from an associated eNB 6. A second receiver 26 is provided for receiving a fourth message from the MME 7, the fourth message including either the requested information obtained by the MME 7 from the eNB 6, or an indication that the UE 5 is not connected to the eNB 6. A processor 27 is provided to control the signalling described above.

Note that in the case where the node is a Service Aware control node 10, the fourth message will not be an indication that the UE 5 is not connected to the eNB 6 as the UE 5 is active with the eNB 6. Note also that the description above of transmitters and receivers is of functional components. These may be embodied in one or more physical transceivers.

The Wi-Fi AC 10 may also be provided with a non-transitory computer readable medium in the form of a memory 28 that can be used to store data and a computer program 29. The computer program 29, when executed by the processor 27, causes the Wi-Fi AC 9 to behave as described above. Note also that an external carrier medium 30 such as a flash drive or a Compact Disk may be used to store the computer program 29.

The above description is of a scenario in which the UE 5 is attached to the MME 7. Note that the same principle can be used when the UE 5 is connected to either GSM/GERAN or WCDMA/UTRAN. In this case the MME 7 is replaced with a Serving GPRS Support Node (SGSN) and the eNB is replaced by a BSC/RNC. This has particular utility in a multi-RAN scenario when the SGSN and MME are combined in a single node.

The techniques described above provide a scalable solution regarding signalling load in the network. The MME 7 (or SGSN) for a UE 5 is very seldom changed. This means that updates of the UE 5 location towards the location function 8 are also very infrequent, and so there is no need to update the location function 8 each time an eNB serving the UE 5 changes. There is no need to update the locator each time the UE 5 enters an idle/inactive state (note that the UE context is deleted at the eNB 6/RNC each time the UE 5 enters an idle/inactive state.

No new interfaces are required at the eNB 6, as the existing S1-AP connection is used between the eNB 6 and the MME 7.

Furthermore, existing security mechanisms between the MME 7 (or SGSN) and eNB 6 can be re-used. The signalling between the MME 7 and the eNB 6 can be performed using existing IPsec tunnels, or existing Virtual Private networks can be re-used.

It will be appreciated by the person of skill in the art that various modifications may be made to the above-described embodiments without departing from the scope of the present invention as described in the appended claims. For example, the embodiments described above focus on the case where an MME 7 communicates with an eNB 6. It will be appreciated that core network nodes other than an MME, such as an SGSN, may be substituted in a UTRAN network, and a Radio Network Controller (RNC) may be substituted for an eNB. Furthermore, an S1-AP connection is described, but it will be appreciated that other types of connection associated with the UE may be used.

The following abbreviations have been used in this specification:
- 3GPP: 3rd Generation Partnership Project
- AC: Access Controller
- AP: Access Point
- BNG: Broadband Network Gateway
- BSC: Base Station Controller
- BTS: Base Transceiver Station
- CDMA2000: Code Division Multiple Access 2000
- D-AMPS: Digital-Advanced Mobile Phone Service
- eNB: evolved NodeB
- EDGE: Enhanced Data rates for Global Evolution
- EPC: Evolved Packet Core
- EPS: Evolved Packet System
- E-UTRAN: Evolved Universal Terrestrial Radio Access Network
- FOMA: Freedom of Mobile Multimedia Access
- GPRS: General Packet Radio Service
- GSM: Global System for Mobile communication
- HSPA: High-Speed Packet Access
- HSS: Home Subscriber Server
- IMSI: International Mobile Subscriber Identity
- LTE: Long Term Evolution
- MME: Mobility Management Entity
- NAI: Network Access Identifier
- PDN-GW: Packet Data Network Gateway,
- RAT: Radio Access Technology
- RG: Residential Gateway
- RNC: Radio Network Controller
- RRC: Radio Resource Control
- SGSN: Serving GPRS Support Node
- SGW: Serving Gateway
- TD-SCDMA: Time Division Synchronous Code Division Multiple Access
- TWAG: Trusted WLAN Access Gateway
- UE: User Equipment
- UMTS: Universal Mobile Telecommunications System
- WCDMA: Wideband Code Division Multiple Access
- WLAN: Wireless Local Area Network

## Claims

1. A method of communicating with an evolved NodeB, eNB (6) in a communication network comprising a 3GPP network and a Wi-Fi access network, the 3GPP network comprising a User Equipment, UE (5), the eNB (6), a Mobility Management Entity, MME (7), and a location function (8), the method comprising, at the MME (7):
providing information to the location function (8), the location function storing information associating an identity of the MME (7) with the UE (5);
receiving (S3) from a further node (9; 10) which is a Wi-Fi access controller (9) or Service Aware control node (10) a first message, the first message based on information acquired from the location function (8) and identifying a UE (5) connected with the eNB (6);
determining (S4) whether an established connection relating to the UE (5) exists between the MME (7) and the eNB (6);
in the event that the established connection exists, forwarding (S5) the first message to the eNB (6) using the established connection, receiving (S6) a first response message from the eNB (6) including any information requested from the eNB (6), and forwarding (S7) the first response to the further node (9; 10); and
in the event that the established connection does not exist, sending (S8) a second response message to the further node (9; 10), the second response message informing the further node that the UE (5) is not connected with the eNB (6).

2. The method according claim 1 further comprising forwarding (S7) the response to the further node (9; 10) via the location function (8).

3. A method of communicating with an evolved NodeB, eNB (6) in a communication network comprising a 3GPP network and a Wi-Fi access network, the 3GPP network comprising a User Equipment, UE (5), the eNB (6), a Mobility Management Entity, MME (7), and a location function (8) storing information associating an identity of the MME (7) with the UE (5), the method comprising, at a further node (9; 10) which is a Wi-Fi access controller (9) or Service Aware control node (10):
querying (S1) the location function (8) with information identifying a UE (5);
receiving (S2) from the location function (8) information identifying the MME (7) associated with the UE (5);
sending (S3) to a MME (7) associated with a UE (5) a message, the message identifying the UE and to be forwarded to an associated eNB (6);
receiving (S7) from the MME (7) a second message, the second message including any of requested information obtained by the MME (7) from the eNB (6), and an indication that the UE (5) is not connected to the eNB (6).

4. The method according to claim 1, 2, or 3, wherein the further node is a Wi-Fi access controller (9), and the requested information includes a decision relating to allowing access of the UE (5) to the Wi-Fi access network.

5. The method according to claim 1, 2, or 3, wherein the further node is a Service Aware control node (10), and the requested information includes information relating to service optimization.

6. A Mobility Management Entity, MME (7) comprising:
a first receiver (14) for receiving from a further node (9; 10) which is a Wi-Fi access controller (9) or Service Aware control node (10) a first message, the first message identifying a User Equipment, UE (5) connected with an evolved NodeB, eNB (6);
a processor (15) for determining whether an established connection relating to the UE (5) exists between the MME (7) and the eNB (6);
a first transmitter (16) for, in the event that the established connection exists, forwarding the first message to the eNB (6) using the established connection, a second receiver (17) for receiving a first response message from the eNB (6),
a second transmitter (18) for providing information to a location function (8), the location function storing information associating an identity of the MME (7) with the UE (5), and forwarding the first response to the further node (9; 10); and
a third transmitter (19) for, in the event that the established connection does not exist, sending a second response message to the further node (9; 10), the second response message informing the further node that the UE (5) is not connected with the eNB.

7. The MME (7) according to claim 6, wherein the first response includes one of a decision relating to allowing access of the UE (5) to a Wi-Fi access network and information relating to service optimization.

8. The MME (7) according to claim 6 or 7, wherein the second transmitter (18) is arranged to forward the response to the further node (9; 10) via the location function (8).

9. A node (9; 10) which is a Wi-Fi access controller (9) or Service Aware control node (10) for use in a communication network comprising a 3GPP network and a Wi-Fi access network, the 3GPP network comprising a User Equipment, UE (5), the eNB (6), a Mobility Management Entity, MME (7), and a location function (8) storing information associating an identity of the MME (7) with the UE (5), the node (9, 10) comprising:
a transmitter (25) for querying the location function (8) with information identifying a UE (5), and for sending to the MME (7) a message, the message identifying the UE (5) associated with an eNB (6);
a receiver (26) for receiving from the location function (8) information identifying the MME (7) associated with the UE (5), and receiving from the MME (7) a second message, the second message including any of requested information obtained by the MME (7) from the eNB (6), and an indication that the UE (5) is not connected to the eNB (6).

10. The node (9, 10) according to claim 9, wherein the node is a Wi-Fi access controller (9), and the requested information includes a decision relating to allowing access of the UE (5) to the Wi-Fi access network.

11. The node (9, 10) according to claim 9, wherein the node is a Service Aware control node (10), and the requested information includes information relating to service optimization.

12. A computer program (21), comprising computer readable code which, when run on at least one processor, causes the processor to perform one of the methods as claimed in any one of claims 1 to 5.

13. A computer program product comprising a non-transitory computer readable medium (20; 28) and a computer program (21) according to claim 12, wherein the computer program is stored on the non-transitory computer readable medium.

## Patentansprüche

1. Verfahren zum Kommunizieren mit einem Evolved NodeB, eNB (6) in einem Kommunikationsnetzwerk, umfassend ein 3GPP-Netzwerk und ein WLAN-Zugangsnetzwerk, wobei das 3GPP-Netzwerk eine Benutzerausrüstung, UE (5), den eNB (6), eine Mobility Management Entity, MME (7) und eine Ortungsfunktion (8) umfasst, wobei das Verfahren an der MME (7) umfasst:
Bereitstellen von Informationen für die Ortungsfunktion (8), wobei die Ortungsfunktion Informationen speichert, welche eine Identität der MME (7) mit der UE (5) verknüpft;
Empfangen (S3) einer ersten Nachricht von einem weiteren Knoten (9; 10), welcher eine WLAN-Zugangssteuereinheit (9) oder ein Service Aware-Steuerknoten (10) ist, wobei die erste Nachricht auf Informationen basiert, welche von der Ortungsfunktion (8) erworben wurden und eine UE (5) identifizieren, welche mit dem eNB (6) verbunden ist;
Bestimmen (S4), ob eine hergestellte Verbindung, welche sich auf die UE (5) bezieht, zwischen der MME (7) und dem eNB (6) existiert;
in dem Fall, dass die hergestellte Verbindung existiert, Weiterleiten (S5) der ersten Nachricht an den eNB (6) unter Verwendung der hergestellten Verbindung, Empfangen (S6) einer ersten Antwortnachricht von dem eNB (6) beinhaltend alle Informationen, welche von dem eNB (6) angefordert wurden, und Weiterleiten (S7) der ersten Antwort an den weiteren Knoten (9; 10); und
in dem Fall, dass die hergestellte Verbindung nicht existiert, Senden (S8) einer zweiten Antwortnachricht an den weiteren Knoten (9; 10), wobei die zweite Antwortnachricht den weiteren Knoten informiert, dass die UE (5) nicht mit dem eNB (6) verbunden ist.

2. Verfahren nach Anspruch 1, weiter Weiterleiten (S7) der Antwort an den weiteren Knoten (9; 10) über die Ortungsfunktion (8) umfassend.

3. Verfahren zum Kommunizieren mit einem Evolved NodeB, eNB (6) in einem Kommunikationsnetzwerk, umfassend ein 3GPP-Netzwerk und ein WLAN-Zugangsnetzwerk, wobei das 3GPP-Netzwerk eine Benutzerausrüstung. UE (5), den eNB (6), eine Mobility Management Entity, MME (7) und eine Ortungsfunktion (8), welche Informationen speichert, welche eine Identität der MME (7) mit der UE (5) verknüpft, umfasst, wobei das Verfahren an einem weiteren Knoten (9; 10), welcher eine WLAN-Zugangssteuereinheit (9) oder ein Service Aware-Steuerknoten (10) ist, umfasst:
Abfragen (S1) der Ortungsfunktion (8) nach Informationen, welche eine UE (5) identifizieren;
Empfangen (S2) von Informationen, welche die MME (7) identifizieren, welche mit der UE (5) verknüpft ist, von der Ortungsfunktion (8);
Senden (S3) einer Nachricht an eine MME (7), welche mit einer UE (5) verknüpft ist, wobei die Nachricht die UE identifiziert und an einen verknüpften eNB (6) weiterzuleiten ist;
Empfangen (S7) einer zweiten Nachricht von der MME (7), wobei die zweite Nachricht alle der angeforderten Informationen, welche durch die MME (7) von dem eNB (6) erhalten wurden, und einen Hinweis, dass die UE (5) nicht mit dem eNB (6) verbunden ist, beinhaltet.

4. Verfahren nach Anspruch 1, 2 oder 3, wobei der weitere Knoten eine WLAN-Zugangssteuereinheit (9) ist und die angeforderten Informationen eine Entscheidung in Bezug auf Erlauben von Zugang der UE (5) zu dem WLAN-Zugangsnetzwerk beinhalten.

5. Verfahren nach Anspruch 1, 2 oder 3, wobei der weitere Knoten ein Service Aware-Steuerknoten (10) ist und die angeforderten Informationen Informationen in Bezug auf Service-Optimierung beinhalten.

6. Mobility Management Entity, MME (7), umfassend:
einen ersten Empfänger (14) zum Empfangen einer ersten Nachricht von einem weiteren Knoten (9; 10), welcher eine WLAN-Zugangssteuereinheit (9) oder ein Service Aware-Steuerknoten (10) ist, wobei die ersten Nachricht eine Benutzerausrüstung, UE (5) identifiziert, welche mit einem Evolved NodeB, eNB (6) verbunden ist;
einen Prozessor (15) zum Bestimmen, ob eine hergestellte Verbindung, welche sich auf die UE (5) bezieht, zwischen der MME (7) und dem eNB (6) existiert;
einen ersten Transmitter (16) zum Weiterleiten der ersten Nachricht an den eNB (6) in dem Fall, dass die hergestellte Verbindung existiert, unter Verwendung der hergestellten Verbindung, eines zweiten Empfängers (17) zum Empfangen einer ersten Antwortnachricht von dem eNB (6),
einen zweiten Transmitter (18) zum Bereitstellen von Informationen für eine Ortungsfunktion (8), wobei die Ortungsfunktion Informationen speichert, welche eine Identität der MME (7) mit der UE (5) verknüpft, und Weiterleiten der ersten Antwort an den weiteren Knoten (9; 10); und
einen dritten Transmitter (19) zum Senden einer zweiten Antwortnachricht an den weiteren Knoten (9; 10) in dem Fall, dass die hergestellte Verbindung nicht existiert, wobei die zweite Antwortnachricht den weiteren Knoten informiert, dass die UE (5) nicht mit dem eNB verbunden ist.

7. MME (7) nach Anspruch 6, wobei die erste Antwort eines von einer Entscheidung in Bezug auf Erlauben von Zugang der UE (5) zu dem WLAN-Zugangsnetzwerk und Informationen in Bezug auf Service-Optimierung beinhaltet.

8. MME (7)nach Anspruch 6 oder 7, wobei der zweite Transmitter (18) angeordnet ist, um die Antwort an den weiteren Knoten (9; 10) über die Ortungsfunktion (8) weiterzuleiten.

9. Knoten (9; 10), welcher eine WLAN-Zugangssteuereinheit (9) oder ein Service Aware-Steuerknoten (10) ist, zur Verwendung in einem Kommunikationsnetzwerk, umfassend ein 3GPP-Netzwerk und ein WLAN-Zugangsnetzwerk, wobei das 3GPP-Netzwerk eine Benutzerausrüstung. UE (5), den eNB (6), eine Mobility Management Entity, MME (7) und eine Ortungsfunktion (8), welche Informationen speichert, welche eine Identität der MME (7) mit der UE (5) verknüpft, umfasst, wobei der Knoten (9; 10) umfasst:
einen Transmitter (25) zum Abfragen der Ortungsfunktion (8) nach Informationen, welche eine UE (5) identifizieren, und zum Senden einer Nachricht an die MME (7), wobei die Nachricht die UE (5) identifiziert, welche mit einem eNB (6) verknüpft ist;
einen Empfänger (26) zum Empfangen von Informationen, welche die MME (7), welche mit der UE (5) verknüpft ist, von der Ortungsfunktion (8), und Empfangen einer zweiten Nachricht von der MME (7), wobei die zweite Nachricht alle der angeforderten Informationen, welche durch die MME (7) von dem eNB (6) erhalten wurden, und einen Hinweis, dass die UE (5) nicht mit dem eNB (6) verbunden ist, beinhaltet.

10. Knoten (9; 10) nach Anspruch 9, wobei der Knoten eine WLAN-Zugangssteuereinheit (9) ist und die angeforderten Informationen eine Entscheidung in Bezug auf Erlauben von Zugang der UE (5) zu dem WLAN-Zugangsnetzwerk beinhalten.

11. Knoten (9; 10) nach Anspruch 9, wobei der Knoten ein Service Aware-Steuerknoten (10) ist und die angeforderten Informationen Informationen in Bezug auf Service-Optimierung beinhalten.

12. Computerprogramm (21), umfassend rechnerlesbaren Code, welcher bei Ausführung auf zumindest einem Prozessor, den Prozessor veranlasst, eines der Verfahren nach einem der Ansprüche 1 bis 5 auszuführen.

13. Rechnerprogrammprodukt, umfassend ein nichtflüchtiges rechnerlesbares Medium (20; 28) und ein Computerprogramm (21) nach Anspruch 12, wobei das Computerprogramm auf dem nichtflüchtigen rechnerlesbaren Medium gespeichert ist.

## Revendications

1. Procédé de communication avec un nœud B évolué, eNB, (6) dans un réseau de communication comprenant un réseau 3GPP et un réseau d'accès Wifi, le réseau 3GPP comprenant un équipement d'utilisateur, UE, (5), l'eNB (6), une entité de gestion de mobilité, MME, (7), et une fonction de localisation (8), le procédé comprenant, à la MME (7) :
la fourniture d'informations à la fonction de localisation (8), la fonction de localisation mémorisant des informations associant une identité de la MME (7) à l'UE (5) ;
la réception (S3), en provenance d'un autre nœud (9 ; 10) qui est un organe de commande d'accès Wifi (9) ou un nœud de commande conscient du service (10), d'un premier message, le premier message étant basé sur des informations acquises auprès de la fonction de localisation (8) et identifiant un UE (5) connecté à l'eNB (6) ;
la détermination (S4) s'il existe ou non une connexion établie relative à l'UE (5) entre la MME (7) et l'eNB (6) ;
si la connexion établie existe, le transfert (S5) du premier message à l'eNB (6) en utilisant la connexion établie, la réception (S6) d'un premier message de réponse en provenance de l'eNB (6) incluant des informations demandées en provenance de l'eNB (6), et le transfert (S7) de la première réponse à l'autre nœud (9 ; 10) ; et
si la connexion établie n'existe pas, l'envoi (S8) d'un second message de réponse à l'autre nœud (9 ; 10), le second message de réponse informant l'autre nœud que l'UE (5) n'est pas connecté à l'eNB (6).

2. Procédé selon la revendication 1, comprenant en outre le transfert (S7) de la réponse à l'autre nœud (9 ; 10) par l'intermédiaire de la fonction de localisation (8).

3. Procédé de communication avec un nœud B évolué, eNB, (6) dans un réseau de communication comprenant un réseau 3GPP et un réseau d'accès Wifi, le réseau 3GPP comprenant un équipement d'utilisateur, UE, (5), l'eNB (6), une entité de gestion de mobilité, MME, (7), et une fonction de localisation (8) mémorisant des informations associant une identité de la MME (7) à l'UE (5), le procédé comprenant, à un autre nœud (9; 10) qui est un organe de commande d'accès Wifi (9) ou un nœud de commande conscient du service (10) :
l'interrogation (S1) de la fonction de localisation (8) avec des informations identifiant un UE (5) ;
la réception (S2), en provenance de la fonction de localisation (8), d'informations identifiant la MME (7) associée à l'UE (5) ;
l'envoi (S3) d'un message à une MME (7) associée à l'UE (5), le message identifiant l'UE et devant être transféré à un eNB (6) associé ;
la réception (S7) d'un second message en provenance de la MME (7), le second message incluant l'une quelconque d'informations demandées obtenues par la MME (7) auprès de l'eNB (6) et d'une indication que l'UE (5) n'est pas connecté à l'eNB (6).

4. Procédé selon la revendication 1, 2 ou 3, dans lequel l'autre nœud est un organe de commande d'accès Wifi (9), et les informations demandées incluent une décision relative à une autorisation d'accès de l'UE (5) au réseau d'accès Wifi.

5. Procédé selon la revendication 1, 2 ou 3, dans lequel l'autre nœud est un nœud de commande conscient du service (10), et les informations demandées incluent des informations relatives à une optimisation de service.

6. Entité de gestion de mobilité, MME, (7), comprenant :
un premier récepteur (14) pour la réception, en provenance d'un autre nœud (9; 10) qui est un organe de commande d'accès Wifi (9) ou un nœud de commande conscient du service (10), d'un premier message, le premier message identifiant un équipement d'utilisateur, UE, (5) connecté à un nœud B évolué, eNB (6) ;
un processeur (15) pour la détermination s'il existe ou non une connexion établie relative à l'UE (5) entre la MME (7) et l'eNB (6) ;
un premier émetteur (16) pour, si la connexion établie existe, le transfert du premier message à l'eNB (6) en utilisant la connexion établie, un second récepteur (17) pour la réception d'un premier message de réponse en provenance de l'eNB (6) ;
un deuxième émetteur (18) pour la fourniture d'informations à une fonction de localisation (8), la fonction de localisation mémorisant des informations associant une identité de la MME (7) à l'UE (5), et le transfert de la première réponse à l'autre nœud (9 ; 10) ; et
un troisième émetteur (19) pour, si la connexion établie n'existe pas, l'envoi d'un second message de réponse à l'autre nœud (9 ; 10), le second message de réponse informant l'autre nœud que l'UE (5) n'est pas connecté à l'eNB.

7. MME (7) selon la revendication 6, dans laquelle la première réponse inclut l'une d'une décision relative à une autorisation d'accès de l'UE (5) à un réseau d'accès Wifi et d'informations relatives à une optimisation de service.

8. MME (7) selon la revendication 6 ou 7, dans laquelle le deuxième émetteur (18) est agencé pour le transfert de la réponse à l'autre nœud (9 ; 10) par l'intermédiaire de la fonction de localisation (8).

9. Nœud (9; 10) qui est un organe de commande d'accès Wifi (9) ou un nœud de commande conscient du service (10) destiné à être utilisé dans un réseau de communication comprenant un réseau 3GPP et un réseau d'accès Wifi, le réseau 3GPP comprenant un équipement d'utilisateur, UE, (5), l'eNB (6), une entité de gestion de mobilité, MME, (7), et une fonction de localisation (8) mémorisant des informations associant une identité de la MME (7) à l'UE (5), le nœud (9, 10) comprenant :
un émetteur (25) pour l'interrogation de la fonction de localisation (8) avec des informations identifiant un UE (5), et l'envoi d'un message à la MME (7), le message identifiant l'UE (5) associé à un eNB (6) ;
un récepteur (26) pour la réception, en provenance de la fonction de localisation (8), d'informations identifiant la MME (7) associée à l'UE (5), et la réception d'un second message en provenance de la MME (7), le second message incluant l'une quelconque d'informations demandées obtenues par la MME (7) auprès de l'eNB (6) et d'une indication que l'UE (5) n'est pas connecté à l'eNB (6).

10. Nœud (9, 10) selon la revendication 9, dans lequel le nœud est un organe de commande d'accès Wifi (9), et les informations demandées incluent une décision relative à une autorisation d'accès de l'UE (5) au réseau d'accès Wifi.

11. Nœud (9, 10) selon la revendication 9, dans lequel le nœud est un nœud de commande conscient du service (10), et les informations demandées incluent des informations relatives à une optimisation de service.

12. Programme informatique (21) comprenant un code lisible par ordinateur qui, lorsqu'il est exécuté sur au moins un processeur, amène le processeur à effectuer l'un des procédés selon l'une quelconque des revendications 1 à 5.

13. Produit de programme informatique comprenant un support lisible par ordinateur non transitoire (20; 28) et un programme informatique (21) selon la revendication 12, dans lequel le programme informatique est mémorisé sur le support lisible par ordinateur non transitoire.
